# EUROPEAN PATENT APPLICATION

(11) **EP 2 320 307 A1**
(43) Date of publication of application: **11.05.2011**
(21) Application number: 09172894.9
(22) Date of filing: 13.10.2009
(51) Int. Cl.: G06F 3/041

(54) **Portable electronic device including touch-sensitive display and method of controlling same**

(71) Applicant: RESEARCH IN MOTION LIMITED, Waterloo, Ontario N2L 3W8 (CA)
(72) Inventor: Almalki, Nazih, Waterloo Ontario N2L 3W8 (CA); Simmons, Sean Bartholomew, Waterloo Ontario N2L 3W8 (CA)
(74) Representative: Phillips, Emily Elizabeth

(57) **Abstract**

A method includes detecting a plurality of touches on a touch-sensitive display, collecting applied force values, determined by at least one force sensor, for the plurality of touches, and changing a first force threshold value based on the collected applied force values.

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

Improvements in devices with touch-sensitive displays are desirable.

### SUMMARY

A method includes detecting a plurality of touches on a touch-sensitive display, collecting applied force values, determined by at least one force sensor, for the plurality of touches, and changing a first threshold value based on the collected applied force values.

A computer-readable medium has computer-readable code executable by at least one processor of a portable electronic device to perform the above method.

An electronic device includes a touch-sensitive display operable to detect a touches thereon, at least one force sensor arranged to determine applied force values from the touches, and at least one processor, operably coupled to the touch-sensitive display and to the at least one force sensor, to collect the applied force values and change a first threshold value based on the collected applied force values.

### BRIEF DESCRIPTION OF THE DRAWINGS

FIG. 1 is a block diagram of a portable electronic device in accordance with the present disclosure.

FIG. 2A is a front view of an example of a portable electronic device in accordance with the present disclosure.

FIG. 2B is a sectional side view of the portable electronic device through the line 202 of FIG. 2, in accordance with the present disclosure.

FIG. 3 is a functional block diagram showing components of the portable electronic device in accordance with the present disclosure.

FIG. 4 is a flowchart illustrating a method of controlling an electronic device to modify a threshold value of force to perform an action, in accordance with the present disclosure.

### DETAILED DESCRIPTION

The following describes an electronic device and method including detecting a plurality of touches on a touch-sensitive display, collecting applied force values, determined by at least one force sensor, for the plurality of touches, and changing a first threshold value based on the collected applied force values.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

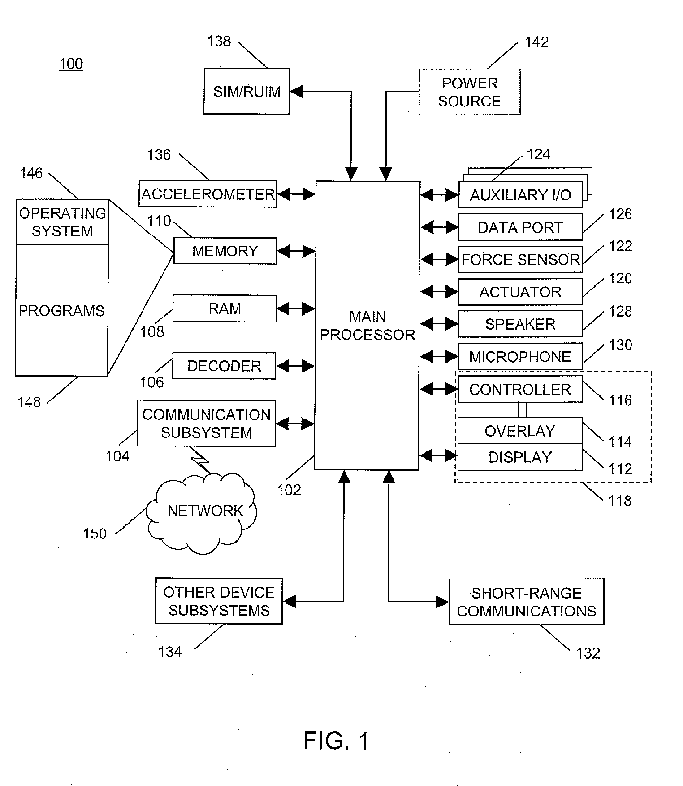

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 115 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the controller 116, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x component may be determined by a signal generated from one touch sensor layer, and the y component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected.

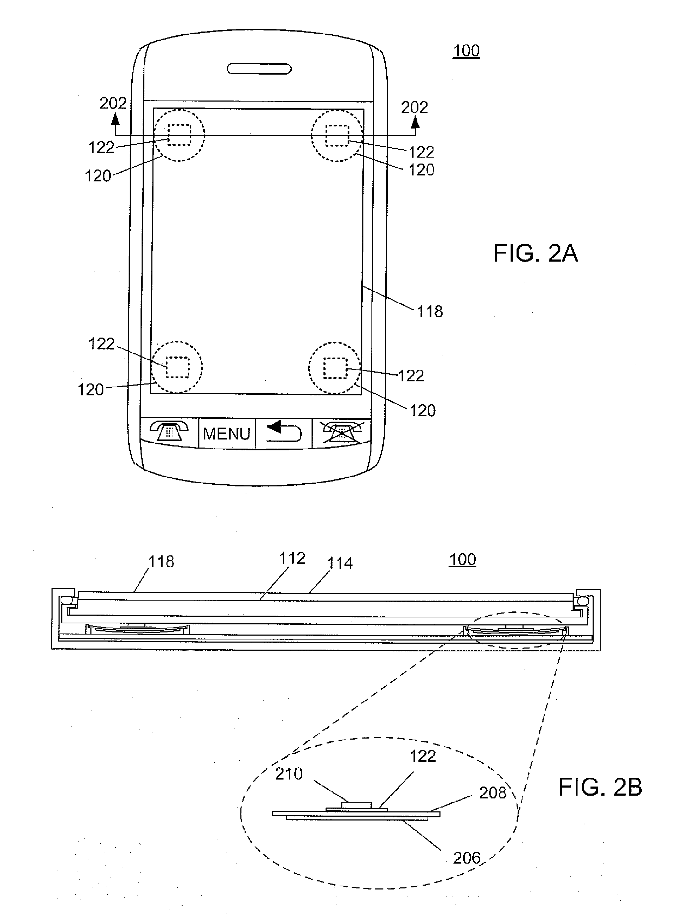

The actuator 120 may comprise one or more piezoelectric (piezo) actuators that provide tactile feedback. FIG. 2A is front view of an example of a portable electronic device 100. In the example shown in FIG. 2A, the actuator 120 comprises four piezo actuators 120, each located near a respective corner of the touch-sensitive display 118. FIG. 2B is a sectional side view of the portable electronic device 100 through the line 202 of FIG 2A. Each piezo actuator 120 is supported within the portable electronic device 100 such that contraction of the piezo actuators 120 applies a force against the touch-sensitive display 118, opposing a force externally applied to the display 118. Each piezo actuator 120 includes a piezoelectric device, such as a piezoelectric ceramic (piezoelectric) disk 206 adhered to a metal substrate 208. An element 210 that is advantageously at least partially flexible and comprises, for example, hard rubber may be located between the disk 206 and the touch-sensitive display 118. The element 210 does not substantially dampen the force applied to or on the touch-sensitive display 118. In the example shown in FIG. 2A, four force sensors 122 are utilized, with each force sensor 122 located between an element 210 and a metal substrate 208. The metal substrate 208 bends when the piezoelectric disk 206 contracts diametrically due to build up of charge at the piezoelectric disk 206 or in response to an external force applied to the touch-sensitive display 118. The charge may be adjusted by varying the applied voltage or current, thereby controlling the force applied by the piezo actuators 120 on the touch-sensitive display 118. The charge on the piezo actuators 120 may be removed by a controlled discharge current that causes the piezoelectric disk 206 to expand diametrically, decreasing the force applied by the piezo actuators 120 on the touch-sensitive display 118. Absent an external force applied to the overlay 114 and absent a charge on the piezoelectric disk 206, the piezo actuator 120 may be slightly bent due to a mechanical preload.

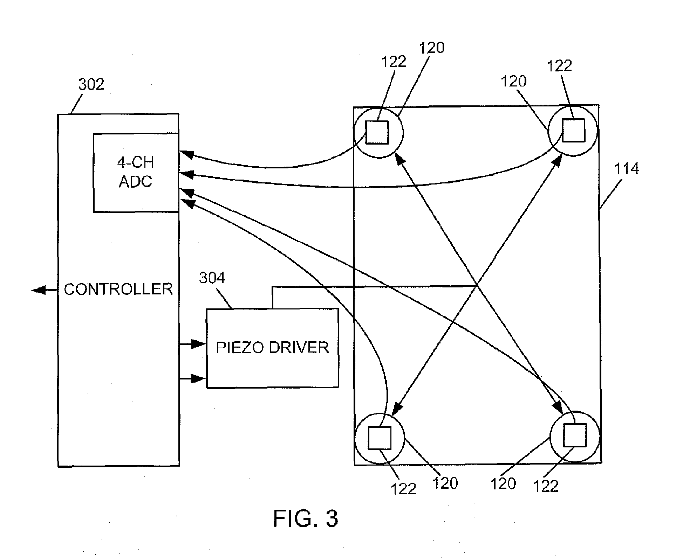

FIG. 3 shows a functional block diagram of components of the portable electronic device 100. In this example, each force sensor 122 is connected to a controller 302, which includes an amplifier and analog-to-digital converter (ADC). The force sensors 122 may be force-sensing resistors in an electrical circuit. As applied force on the touch-sensitive display 118 increases, the resistance decreases. This change is determined via the controller 116 for each of the force sensors 122. The applied force of a touch is determined based on a value of force at each of the force sensors 122.

The piezo actuators 120 are connected to a piezo driver 304 that communicates with the controller 302. The controller 302 is also in communication with the main processor 102 of the portable electronic device 10 and may receive and provide signals to the main processor 102. The piezo driver 304 may optionally be embodied in drive circuitry between the controller 302 and the piezoelectric disks 312. The controller 302 controls the piezo driver 304 that controls the current to the piezoelectric disks 206 and thus controls the charge and the force applied by the piezo actuators 120 on the touch-sensitive display 118. Each of the piezoelectric disks 206 may be controlled substantially equally and concurrently. Optionally, the piezoelectric disks 206 may be controlled separately. In the example described below, collapse and release of a dome switch is simulated. Other switches, actuators, keys, and so forth may be simulated, or a non-simulated tactile feedback may be provided. When an applied force, on the touch-sensitive display 118, exceeds a first threshold, depression of the touch-sensitive display is detected and the charge at the piezo actuators 120 is modulated to impart a force on the touch-sensitive display to simulate collapse of a dome switch. When the applied force, on the touch-sensitive display 118 falls below a second threshold, after actuation of the piezo actuators 120, release of the touch-sensitive display is detected and the charge at the piezo actuators 120 is modulated to impart a force, by the piezo actuators 120, to simulate release of a dome switch. The second threshold is lower than the first threshold.

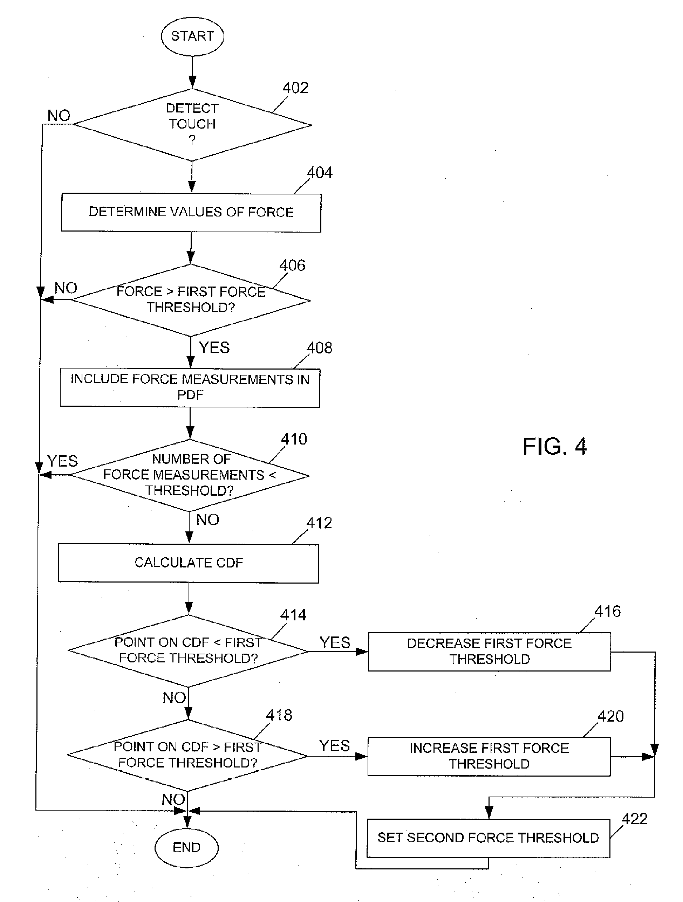

A flowchart illustrating a method of controlling an electronic device to modify the first threshold is shown in FIG. 4. The method is advantageously performed by the processor 102 and the controller 302 performing stored instructions from a computer-readable medium. Coding of software for carrying out such a method is within the scope of a person of ordinary skill in the art given the present description.

When a touch is detected 402, the location of touch on the touch-sensitive display 118 is determined. Signals from the force sensors 122 are received and a value of force at the touch is repeatedly determined 404, during the touch, based on the signals from the force sensors 122. The value of force at the touch may be determined, for example, by summing the forces at each of the force sensors 122 when a single touch is received. Multiple force values may be determined for each touch as the value of force is repeatedly determined.

The force values are compared 406 to the first threshold. When none of the force values determined during the touch exceed the first threshold, the process ends and the force values are not utilized in determining the first and second thresholds. Force values determined during, for example, light touches on the touch-sensitive display 118, swipes and other gestures are not utilized in the determining the thresholds. When a force value determined during the touch exceeds the first threshold, depression of the touch-sensitive display is detected and the process continues at 408.

Each force valued determined during the touch is included 408 in a probability distribution function that is stored in memory at the portable electronic device 100. For example, the probability distribution function may include columns based on force ranges. A column is incremented by 1 when a force value, determined during the touch, falls within the range for that column.

The number of force values determined is compared 410 to a threshold number and when the number of force measurements is below the threshold number, the process ends. When the number of force measurements is not less than the threshold number, the process continues at 412. The process does not continue at 412 each time a touch is received with an applied force that exceeds the first threshold. Instead, force values for multiple touches are collected in the probability distribution function before the process continues at 412. This threshold is utilized to determine when sufficient data is collected in the probability distribution function for calculating a cumulative distribution function with a high level of confidence.

The cumulative distribution function is calculated 412 from the probability distribution function. The cumulative distribution function may be determined by integrating or summing the probability distribution function. The cumulative distribution function describes the probability distribution of the force values for a touch.

A point probability is determined from the cumulative distribution function and compared to the first threshold 414. For example, the 40% point on the cumulative distribution function is the force that is achieved for 40% of the force values determined during a touch. When the value at the point on the cumulative distribution function is less than the first threshold at 414, the first threshold is decreased 416. The first threshold may be decreased to a value that is closer to the value at the point on the cumulative distribution function, for example, by changing the first threshold by a percentage of the difference. Optionally, the first threshold may be decreased to equal the value at the point on the cumulative distribution function.

The second threshold is set 422 based on the first threshold. For example, the second threshold may be set to about 80 percent of the first threshold or may set by a fixed offset from the first threshold.

When the value at the point on the cumulative distribution function is not less than the first threshold at 414, and the value at the point on the cumulative distribution function is greater than the first threshold at 418, the first threshold is increased 420 and the process continues at 422. The first threshold may be increased to a value that is closer to the value at the point on the cumulative distribution function, for example, by changing the first threshold by a percentage of the difference. Optionally, the first threshold may be increased to equal the value at the point on the cumulative distribution function.

After setting the thresholds, the new force values collected may be included to form a new probability distribution function rather than adding to the previous probability distribution function. Optionally, the force values may continue to be collected along with the previously collected force values to form the probability distribution function.

In the above description, a single touch is described. The method of FIG. 4 is also applicable to multiple touches that overlap in time. When multiple touches that overlap in time are received, the value of force at each touch may be determined, utilizing any suitable method, based on the force values determined at each of the force sensors 122, the location of each of the force sensors 122, and the locations of the touches. The process may continue for each touch.

Optionally, the number of touches for which force values are determined may be compared to a threshold number at 410 rather than comparing the number of force values determined to a threshold number.

A threshold force value, that is utilized to determine when to perform an action such as to provide tactile feedback, is changed based on values of applied force during touches on the touch-sensitive display. The force threshold may be changed depending on the use of the device and changes during the lifetime of the portable electronic device, for example, due to age or other factors.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting a plurality of touches on a touch-sensitive display;
collecting applied force values, determined by at least one force sensor, for the plurality of touches; and
changing a first threshold value based on the collected applied force values.

2. The method according to claim 1, comprising detecting depression of the touch-sensitive display when a value of an applied force for a touch meets the first threshold.

3. The method according to claim 1, comprising determining a second threshold value based on the first threshold value after changing the first threshold value.

4. The method according to claim 3, comprising detecting release of the touch-sensitive display when a value of an applied force for a touch meets the second threshold.

5. The method according to claim 1, wherein collecting comprises determining an applied force value during a touch on the touch-sensitive display and including the applied force value, determined during the touch with the collected applied force values, when the applied force value determined during the touch is greater than or equal to the threshold value.

6. The method according to claim 5, wherein determining an applied force value comprises determining an applied force value based on signals received from a plurality of force sensors.

7. The method according to claim 1, wherein collecting comprises repeatedly determining applied force values during a touch on the touch-sensitive display and including the applied force values, determined during the touch, with the collected applied force values when at least one of the applied force values determined during the touch is greater than or equal to the threshold value.

8. The method according to claim 1, wherein changing a threshold value comprises changing the threshold value based on a distribution of the collected applied force values.

9. The method according to claim 1, wherein changing comprises changing when a minimum number of applied force values are collected.

10. The method according to claim 1, wherein changing comprises changing when applied force values are collected for a minimum number of touches.

11. The method according to claim 1, comprising determining a cumulative distribution function from the collected applied force values and wherein changing comprises changing based on the cumulative distribution function.

12. The method according to claim 8, comprising comparing a value at a point on the cumulative distribution function to the first threshold value and changing the first threshold value based on the comparison.

13. The method according to claim 9, comprising decreasing the first threshold value when the value at the point on the cumulative distribution function is less than the first threshold.

14. The method according to claim 9, comprising increasing the first threshold value when the value at the point on the cumulative distribution function is greater than the first threshold.

15. The method according to claim 1, wherein the first threshold value comprises a threshold value to determine when to perform an action.

16. The method according to claim 1, wherein when a value of an applied force meets a first threshold value, tactile feedback is provided.

17. The method according to claim 16, wherein the tactile feedback comprises simulation of actuation of collapse of a dome switch.

18. A computer-readable medium having computer-readable code executable by at least one processor of a portable electronic device to perform the method according to any one of claims 1 to 17.

19. An electronic device comprising:
a touch-sensitive display operable to detect a touches thereon;
at least one force sensor arranged to determine applied force values from the touches;
at least one processor, operably coupled to the touch-sensitive display and to the at least one force sensor, to collect the applied force values and change a first threshold value based on the collected applied force values.

## Amended claims

### Amended claims in accordance with Rule 137(2) EPC.

**1.** A method comprising:
detecting a plurality of touches on a touch-sensitive display (118);
collecting applied force values, determined by at least one force sensor (122), for the plurality of touches; and
changing a first threshold value based on a distribution of the collected applied force values.

**2.** The method according to claim 1, comprising detecting depression of the touch-sensitive display (118) when a value of an applied force for a touch meets the first threshold value.

**3.** The method according to claim 2, comprising determining a second threshold value based on the first threshold value after changing the first threshold value, wherein the second threshold value is less than the first threshold value.

**4.** The method according to claim 3, comprising detecting release of the touch-sensitive display (118) when a value of an applied force for a touch meets the second threshold value.

**5.** The method according to claim 1, wherein collecting comprises determining an applied force value during a touch on the touch-sensitive display (118) and including the applied force value with the collected applied force values when the applied force value is greater than or equal to the first threshold value.

**6.** The method according to claim 5, wherein determining an applied force value comprises determining an applied force value based on signals received from a plurality of force sensors (122).

**7.** The method according to claim 1, wherein collecting comprises repeatedly determining applied force values during a touch on the touch-sensitive display (118) and including the applied force values with the collected applied force values when at least one of the applied force values is greater than or equal to the first threshold value.

**8.** The method according to claim 1, wherein changing a threshold value comprises changing the threshold value based on a probability distribution function of the collected applied force values.

**9.** The method according to claim 1, wherein changing comprises changing when a threshold number of applied force values are collected.

**10.** The method according to claim 1, wherein changing comprises changing when applied force values are collected for a threshold number of touches.

**11.** The method according to claim 1, comprising determining a cumulative distribution function from the collected applied force values, and wherein changing comprises changing based on the cumulative distribution function.

**12.** The method according to claim 11, comprising comparing a value at a point on the cumulative distribution function to the first threshold value and changing the first threshold value based on the comparison.

**13.** The method according to claim 12, comprising decreasing the first threshold value when a value at the point on the cumulative distribution function is less than the first threshold value.

**14.** The method according to claim 12, comprising increasing the first threshold value when the value at the point on the cumulative distribution function is greater than the first threshold value.

**15.** The method according to claim 1, wherein the first threshold value comprises a force threshold value to determine when to perform an action.

**16.** The method according to claim 1, wherein when a value of an applied force meets the first threshold value, tactile feedback is provided.

**17.** The method according to claim 16, wherein the tactile feedback comprises simulation of actuation of collapse of a dome switch.

**18.** A computer-readable medium having computer-readable code executable by at least one processor (102) of a portable electronic device (100) to perform the method according to any one of claims 1 to 17.

**19.** An electronic device (100) comprising:
a touch-sensitive display (118) operable to detect a touches thereon;
at least one force sensor (122) arranged to determine applied force values from the touches;
at least one processor (102), operably coupled to the touch-sensitive display (118) and to the at least one force sensor (122), to collect the applied force values and change a first threshold value based on a distribution of the collected applied force values.
